Europäisches Patentamt

European Patent Office

Office européen des brevets

(11) Veröffentlichungsnummer: **0 424 924 A1**

# EUROPÄISCHE PATENTANMELDUNG

(21) Anmeldenummer: 90120430.5

(22) Anmeldetag: 24.10.90

(51) Int. Cl.⁵: **A23L 3/015**, A47B 71/00

(30) Priorität: 24.10.89 DE 8912594 U

(43) Veröffentlichungstag der Anmeldung:
02.05.91 Patentblatt 91/18

(84) Benannte Vertragsstaaten:
**DE ES FR IT NL**

(71) Anmelder: **GOLF GmbH & CO KG**
**Nordstrasse 30**
**W-4520 Melle 10(DE)**

(72) Erfinder: **Goschke, Kurt**
**Nordstrasse 30**
**W-4520 Melle 10(DE)**

(74) Vertreter: **Weber, Joachim et al**
**Hoefer, Schmitz, Weber, Patentanwälte**
**Ludwig-Ganghofer-Strasse 20**
**W-8022 Grünwald/München(DE)**

(54) Vakuumvorrichtung für den Haushalts- und Küchenbereich, insbesondere zur Aufbewahrung von Lebensmitteln.

(57) Die Erfindung bezieht sich auf eine Vakuumvorrichtung für den Haushalts- und Küchenbereich. Um die Erhöhung der Haltbarkeit und die Geschmacksbewahrung von Lebensmitteln zu verbessern ist vorgesehen, daß in einem Gehäuse (2), welches einen Innenraum aufweist, der mittels eine Tür (3) verschließbar ist, eine Entkeimungslampe angeordnet ist.

Fig. 1

EP 0 424 924 A1

# VAKUUMVORRICHTUNG FÜR DEN HAUSHALTS- UND KÜCHENBEREICH, INSBESONDERE ZUR AUFBE-WAHRUNG VON LEBENSMITTELN

Die Erfindung betrifft eine Vakuumvorrichtung für den Haushalts- und Küchenbereich, insbesondere zur Aufbewahrung von Lebensmitteln, nach dem Oberbegriff des Anspruchs 1.

Eine gattungsgemäße Vakuumvorrichtung ist aus der DE-OS 3618802 bekannt. Mit dieser Vakuumvorrichtung ist es möglich, die Haltbarkeit von Lebensmitteln zu erhöhen und den den Lebensmitteln eigenen Geschmack auch nach Entnahme aus der Lebensmittelverpackung zu bewahren.

Es ist Aufgabe der vorliegenden Erfindung, eine Vakuumvorrichtung der in Oberbegriff des Anspruches 1 angegebenen Art dahingehend zu verbessern, daß insbesondere neben der Erhöhung der Haltbarkeit und Geschmacksbewahrung von Lebensmitteln ferner eine Entkeimung des Innenraumes der Vakuumvorrichtung möglich ist, ohne daß dabei vorzugsweise Sicherheitsprobleme auftreten.

Die Lösung dieser Aufgabe erfolgt durch die Merkmale des Anspruches 1.

Dadurch wird auf einfache und sichere Art und Weise eine Entkeimung des Innenraumes des Gehäuses der erfindungsgemäßen Vakuumvorrichtung erreicht. Vorzugsweise kann der Innenraum in regelmäßigen Abständen entkeimt werden, bevor Lebensmittel eingelagert werden. Hierzu ist es grundsätzlich möglich, eine Steuerschaltung vorzusehen, so daß die Entkeimungszyklen automatisch durchgeführt werden können.

Die Unteransprüche haben vorteilhafte Weiterbildungen der Erfindung zum Inhalt.

Eine besonders bevorzugte Ausführungsform für eine Entkeimungslampe stellt eine UVC-Lampe dar, da diese kostengünstig und betriebssicher ist.

Eine besonders bevorzugte Anordnung für die Entkeimungslampe stellt die Anbringung an der Deckenwandung des Innenraumes dar, da bei einer derartigen Anordnung sowohl der gesamte Innenraum wie auch das in der Vakuumvorrichtung enthaltene Gut problemlos und vollständig entkeimt werden kann.

Je nach Größe des zu entkeimenden Innenraumes des Gehäuses der Vakuumvorrichtung kann eine oder eine Mehrzahl von Entkeimungslampen im Innenraum angeordnet werden. Dabei ist es grundsätzlich auch möglich, die Seitenwandungen oder die Bodenwandung des Innenraumes mit Entkeimungslampen zu versehen.

Die Bedieneinrichtung der erfindungsgemäßen Vakuumvorrichtung weist bevorzugterweise eine Öffnungstaste auf, die mit einem Ein-/Aus-Schaltkreis derart verbunden ist, daß jedesmal beim Öffnen der Tür des Innenraumes die Entkeimungslampe ausgeschaltet wird. Ein derartiger Schaltkreis kann ferner eine Zeitsteuerrung umfassen, die nach dem Schließen des Innenraumes mit der geeignet abgedichteten Tür die Entkeimungslampe für eine gewisse Zeit einschaltet und danach selbsttätig wieder ausschaltet.

Zur weiteren Erhöhung der Sicherheit bei der Bedienung ist es bevorzugterweise möglich, die Bedieneinrichtung mit einem Sicherungsschalter zu versehen, der unabhängig von der Öffnungstaste ein Ein- und Ausschalten der Entkeimungslampe möglich macht.

Entsprechende Sicherungsschalter können ebenfalls für die Vakuumpumpe und das Belüftungsventil als separate und unabhängig von der Öffnungstaste funktionierende Teile vorgesehen sein.

Eine besonders bevorzugte Ausführungsform für die zuvor genannten Sicherheitschalter stellen Mikroschalter dar, da diese äußerst funktionssicher und platzsparend sind.

Schließlich ist eine besonders bevorzugte Anbringung für die Ausblasöffnung der rückwärtige Teil des Gehäuses, der der Tür des Innenraumes gegenüber liegt, da es dadurch beim Einbau der erfindungsgemäßen Vakuumvorrichtung möglich ist, die Ausblasöffnung an gehäuseseitige Entlüftungssysteme anzuschließen. Grundsätzlich ist es jedoch auch möglich, die Ausblasöffnung in anderen Gehäusewandungen vorzusehen, um eine möglichst großen Anpassungsspielraum an variierende Einbauverhältnisse zu haben. Hierbei ergibt die erfindungsgemäße Vakuumvorrichtung den besonderen Vorteil, daß die im Zuge des Erzeugen des Vakuums aus dem Innenraum abgepumpte Luft bereits entkeimt ist, so daß auch die Umgebung, in der die erfindungsgemäße Vakuumvorrichtung aufgestellt ist, nicht mit aus dem Innenraum abgeleiteten Keimen kontaminiert wird. Dies ist insbesondere in Küchenbereichen von Bedeutung, vor allem dann, wenn die erfindungsgemäße Vakuumvorrichtung bsw. in Krankenhausküchen verwendet wird. Insbesondere für derartige Verwendungszwecke ist es ergänzend möglich, in der Absaugleitung einen Keimfilter, bsw. in Form eines Aktiv-Kohlefilters, vorzusehen.

Bei einer weiteren bevorzugten Ausführungsform ist zusätzlich eine oder eine Mehrzahl von Entkeimungslampen in der Absaugleitung angeordnet. Dies erhöht weiterhin die Keimfreiheit der abgepumpten Luft, da es durchaus denkbar ist, daß sich auch Keime in der Absaugleitung ablagern und dadurch zum einen entweder in den Innenraum gelangen können oder auch in den Außenbereich der Vakuumvorrichtung abgepumpt werden, was insbesondere bei der Verwendung in keimfreien Räumen unerwünscht ist. Durch die wahlweise zusätzliche Anordnung von Entkeimungslampen auch in der Absaugleitung wird somit ein Abpumpen von Keimen aus der Vakuumvorrichtung in die Umbegung sicher vermieden.

Weitere Einzelheiten, Merkmale und Vorteile der Erfindung ergeben sich aus nachfolgender Beschreibung von Ausführungsbeispielen anhand der Zeichnung.

Es zeigt:

Fig.1 eine perspektivische schematisch vereinfachte Darstellung der erfindungsgemäßen Vakuumvorrichtung,

Fig.2 eine stark vereinfachte schematische Darstellung eines Aufnahmebereiches für eine Vakuumpumpe sowie Ventile der Vakuumvorrichtung gemäß Fig.1, und

Fig.3 eine vereinfachte Frontansicht der Vakuumvorrichtung gemäß Fig. 1 in geöffneten Zustand.

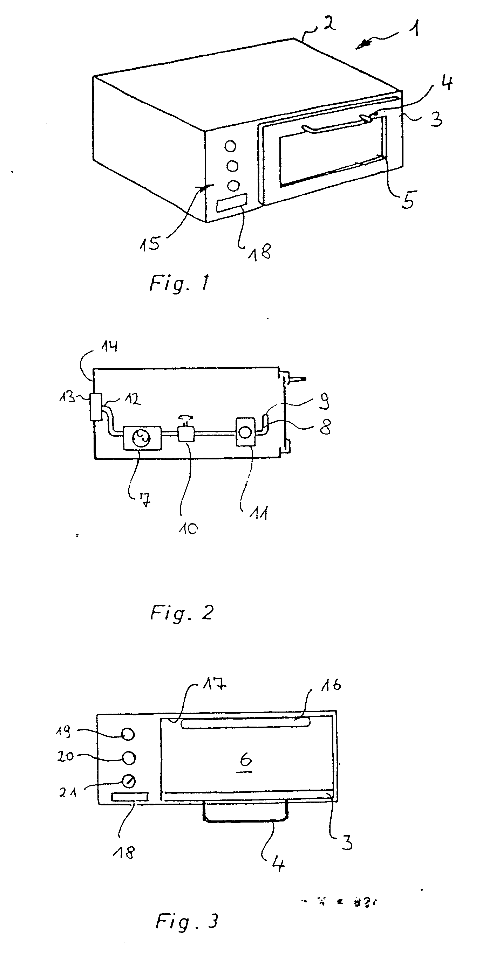

In Fig.1 ist eine Vakuumvorrichtung 1 dargestellt, die insbesondere für den Haushalts- und Küchenbereich zur Aufbewahrung von Lebensmitteln geeignet ist.

Die Vakuumvorrichtung 1 weist ein Gehäuse 2 aus, das im Beispielsfalle quaderförmig aufgebaut ist. Das Gehäuse kann hierzu Rechteckform haben oder auch in Rechteckform mit abgerundeten Kanten bzw. Rundform ausgebildet sein.

Das Gehäuse 2 weist auf seiner Frontseite eine öffenbare Tür 3 auf, die mit einem bügelförmigen Handgriff 4 sowie einem Sichtfenster 5 versehen ist. Die Tür 4 kann bevorzugterweise als Klappe über Scharniere am Gehäuse 2 gelagert sein, so daß zum Öffnen der Tür 3 diese in die aus Fig. 3 ersichtliche Horizontale geschwenkt werden kann. Die Tür 3 ist mit einer um ihren Rand umlaufenden Dichtung versehen, die den Aufbau eines Vakuums innerhalb eines Innenraumes 6 des Gehäuses 2 ermöglicht.

Die Vakuumvorrichtung 1 weist ferner eine in Fig. 2 dargestellte Vakuumpumpe 7 auf, die in einer Absaugleitung 8 angeordnet ist, die an einem Ende 9 mit dem Innenraum 6 in Verbindung steht. In der Absaugleitung 8 sind ferner ein Belüftungsventil 10 sowie ein Druckventil 11 angeordnet. Das Belüftungsventil 10 dient zum Belüften des Innenraumes 6, falls die Tür 3 geöffnet werden soll. Das Druckventil 11 dient zum Einstellen und Regulieren des im Innenraum 6 zu erzeugenden Unterdrucks.

Die Absaugleitung 8 ist an ihrem Ende 12 mit einer Ausblasöffnung 13 verbunden, die in der der Tür 3 gegenüberliegenden Wand 14 des Gehäuses 2 angeordnet ist. Diese Anordnung, die beispielhaft in Fig.2 wiedergegeben ist, ermöglicht beispielsweise einen Anschluß an eventuell vorgesehene

gebäudeseitige Entlüftungssysteme. Zum Evakuieren des Innenraums 6 kann die Vakuumpumpe 7 mit Hilfe einer Bedieneinrichtung 15 eingeschaltet werden, wobei die ventile 10 und 11 beim Evakuieren ein Zurückströmen von Luft in den Innenraum 6 verhindern.

Gemäß Fig.3 ist eine Entkeimungslampe 16 an einer Deckenwandung 17 des Innenraumes 6 befestigt und über nicht näher dargestellte Verbindungsleitungen mit einer Stromquelle oder der Bedieneinrichtung 15 verbunden. Es ist grundsätzlich möglich, auch eine Mehrzahl derartiger Entkeimungslampen 16, vorzugsweise in Form von UVC-Lampen, im Innenraum 6 vorzusehen. Die in Fig.3 dargestellte Ausführungsform ist eine stabförmige Lampe, die besonders günstige Bestrahlungsverhältnisse im Innenraum ergibt.

Die Fig.1 und 3 verdeutlichen, daß die Bedieneinrichtung 15 eine Öffnungstaste 18 aufweist, mit der die Tür 3 geöffnet werden kann. Die Öffnungstaste 18 ist hierbei vorzugsweise mit einem in den Figuren nicht näher dargestellten Ein-/Aus-Schaltkreis verbunden, der zum einen ein Ausschalten der Vakuumpumpe 7 und ein Öffnen des Belüftungsventiles 10 bei gleichzeitigem Lösen des Verschlusses der Tür 3 ermöglicht.

Die Bedieneinrichtung 15 weist ferner im Beispielsfalle drei unabhängig von der Öffnungstaste 18 bedienbare Sicherungsschalter 19-21 auf, mit denen separat die Vakuumpumpe 7, das Belüftungsventil 10 sowie die Entkeimungslampe 16 ein- bzw. ausgeschaltet werden können.

Mit der erfindungsgemäßen Vakuumvorrichtung 1 ist es vorteilhafterweise möglich, den Innenraum 6 vorzuentkeimen wie auch eine Entkeimung durchzuführen, wenn im Innenraum 6 des Gehäuses 2 Lebensmittel aufbewahrt werden. Hierdurch wird gleichzeitig verhindert, daß über die Lebensmittel in den Innenraum 6 gelangte Keime durch die Vakuumpumpe 7 in die Umbegung der Vakuumvorrichtung 1 abgepumpt werden, da die Entkeimungslampe bzw. die Mehrzahl von Entkeimungslampen ein vorheriges Abtöten der Keime möglich macht.

**Ansprüche**

1. Vakuumvorrichtung (1) für den Haushalts- und Küchenbereich, insbesondere zur Aufbewahrung von Lebensmitteln
   - mit einem Gehäuse (2),
   das einem mit einer abgedichteten öffenbaren Tür (3) versehenen Innenraum (6) aufweist, und in dem eine einerseits mit dem Innenraum (6) und andererseits mit einer zu einer Aufblasöffnung (13) des Gehäuses (2) führenden Absaugleitung (8) verbundene Vakuumpumpe (7) angeordnet ist ; und

- mit einer Bedieneinrichtung (15) zum Ein- und Ausschalten der Vakuumpumpe (7) und zum Öffnen der Tür (3), gekennzeichnet

- durch zumindest eine Entkeimungslampe (16), die im Innenraum (6) des Gehäuses (2) angeordnet ist.

2. Vakuumvorrichtung nach Anspruch 1, dadurch gekennzeichnet, daß die Entkeimungslampe (16) als UVC-Lampe ausgebildet ist.

3. Vakuumvorrichtung nach Anspruch 1 oder 2, dadurch gekennzeichnet, daß die Entkeimungslampe (16) an der Deckenwandung (17) des Innenraumes (6) angebracht ist.

4. Vakuumvorrichtung nach einem der Ansprüche 1-3, dadurch gekennzeichnet, daß eine Mehrzahl von Entkeimungslampen (16) im Innenraum (6) angeordnet ist.

5. Vakuumvorrichtung nach einem der Ansprüche 1-4, dadurch gekennzeichnet, daß die Bedieneinrichtung (15) eine Öffnungstaste (18) aufweist, die mit einem Ein-/Aus-Schaltkreis der Entkeimungslampe (16) verbunden ist.

6. Vakuumvorrichtung nach einem der Ansprüche 1-5, dadurch gekennzeichnet, daß die Bedieneinrichtung (15) einen ersten Sicherungsschalter (19) aufweist, der unabhängig von der Öffnungstaste (18) mit der Entkeimungslampe (16) schaltungsverbunden ist.

7. Vakuumvorrichtung nach einem der Ansprüche 1-6, dadurch gekennzeichnet, daß die Bedieneinrichtung (15) einen zweiten Sicherungsschalter (20) aufweist, der unabhängig von der Öffnungstaste (18) mit der Vakuumpumpe (7) schaltungverbunden ist.

8. Vakuumvorrichtung nach einem der Ansprüche 1-7, dadurch gekennzeichnet, daß die Bedieneinrichtung (15) einen dritten Sicherungsschalter (21) aufweist, der unabhängig von der Öffnungstaste (18) mit einem Belüftungsventil (10) verbunden ist, das in dem zum Innenraum (6) führenden Leitungsabschnitt der Absaugleitung (8) angeordnet ist.

9. Vakuumvorrichtung nach einem der Ansprüche 6-8, dadurch gekennzeichnet, daß die Sicherungsschalter (19-21) als Mikroschalter ausgebildet sind.

10. Vakuumvorrichtung nach einem der Ansprüche 1-9, dadurch gekennzeichnet, daß die Ausblasöffnung (13) in der der Tür (3) des Gehäuses (2) gegenüberliegenden Rückwand (14) angeordnet ist.

11. Vakuumvorrichtung nach einem der Ansprüche 1-10. dadurch gekennzeichnet, daß in der Absaugleitung (8) zumindest eine Entkeimungslampe angeordnet ist.

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-3 618 802 (GOLF) <br> * das ganze Dokument * <br> — — — | 1-4 | A 23 <br> L 3/015 <br> A 47 B 71/00 |
| Y,A | FR-A-8 488 50 (WESTINGHOUSE) <br> * Seite 4, Zeilen 43 - 65; Figuren 1, 2 * <br> — — — | 1-4,5 | |
| A | US-A-2 145 196 (HYGRADE SYLVANIA CORPORATION) <br> — — — | | |
| P,A | EP-A-0 368 839 (SM VACUUM SOLICH & MAYER) <br> — — — — | | |

**RECHERCHIERTE SACHGEBIETE (Int. Cl.5)**

A 47 B
A 47 J
A 23 L

Der vorliegende Recherchenbericht wurde für alle Patentansprüche erstellt

| Recherchenort | Abschlußdatum der Recherche | Prüfer |
|---|---|---|
| Den Haag | 24 Januar 91 | DE GROOT R.K. |